# EUROPÄISCHE PATENTSCHRIFT

(11) **EP 0 917 927 B1**
(45) Veröffentlichungstag und Bekanntmachung des Hinweises auf die Patenterteilung: **05.02.2003**
(21) Anmeldenummer: 98203708.7
(22) Anmeldetag: 02.11.1998
(51) Int. Cl.: B23P 15/30, B23B 27/06

(54) **Verfahren zur Herstellung eines Schneideinsatzes zum Gewindeschneiden**
Method for producing a cutting insert for thread cutting
Méthode de production d' une plaquette de coupe à fileter

(30) Priorität: 04.11.1997 AT 68597 U
(43) Veröffentlichungstag der Anmeldung: 26.05.1999
(73) Patentinhaber: PLANSEE TIZIT AKTIENGESELLSCHAFT, 6600 Reutte/Tirol (AT)
(72) Erfinder: Maier, Johann, 6600 Pflach (AT)
(74) Vertreter: Lohnert, Wolfgang, Dr.

(56) Entgegenhaltungen:
- EP-A- 0 113 332
- DE-A- 3 129 451
- GB-A- 2 205 513

## Beschreibung

Die Erfindung betrifft ein Verfahren zur Herstellung eines Schneideinsatzes für die Gewindeherstellung mit mehreren gleichzeitig in Schneideinsatz stehenden, das Gewindeprofil abgestuft schneidenden Schneidzähnen, durch Pressen und Sintern eines Rohlings und anschließende mechanische Bearbeitung auf Endmaß.

Schneideinsätze mit mehreren gleichzeitig in Schneideingriff stehenden Schneidzähnen, die das Gewindeprofil in abgestufter zunehmender Gewindeprofiltiefe schneiden, werden insbesondere zur Herstellung von Innenund Außengewinden bei Rohren, die in der Erdöl- und Erdgasindustrie verwendet werden, eingesetzt. Derartige Gewinde müssen mit sehr engen Toleranzen hergestellt werden, so daß höchste Anforderungen an die Maßgenauigkeit der Schneideinsätze, insbesondere hinsichtlich des letzten das Gewinde fertig schneidenden Zahnes gestellt werden.

Die Fertigung dieser Schneideinsätze aus verschleißfestem Material, in der Regel Hartmetall, erfolgt auf pulvermetallurgischem Wege und zwar bisher üblicherweise so, daß durch Pressen und Sintern ein Rohling des Schneideinsatzes ohne Ausformung der einzelnen Schneidzähne hergestellt wird. Zuerst werden die Schneideinsätze in der Regel an der Auflagefläche und Spanfläche plangeschliffen womit die Dicke des Schneideinsatzes in der geforderten Toleranz hergestellt wird. Dann werden die Schneidzähne durch Schleifen mehrerer Rohlinge im Stapel mit einer Profilschleifscheibe hergestellt, wobei in einem einzigen Arbeitsgang gleichzeitig die Fertigmaße der einzelnen Schneidzähne hinsichtlich Profiltiefe und Zahnbreite erreicht werden.

Problematisch ist hierbei, daß mit der Profilschleifscheibe die Freiflächen der seitlichen Schneidkanten der einzelnen Schneidzähne nur parallel zueinander geschliffen werden können und daß damit die für die Zerspanung notwendigen Freiwinkel dieser Schneidkanten vielfach nur unzureichend erreicht werden können.
Diese Freiwinkel werden dadurch erreicht, daß die Schneideinsätze beim Profilschleifen zuerst verkippt werden, um die notwendigen Freiwinkel der Freiflächen der stirnseitigen Schneidkanten der einzelnen Schneidzähne zu erzielen. Wenn dann die Schneideinsätze unter 0° Spanwinkel im Werkzeughalter eingespannt werden, ergeben sich damit auch die Freiwinkel der Freiflächen der seitlichen Schneidkanten der einzelnen Schneidzähne, da die seitlichen Schneidkanten mit der stirnseitigen Schneidkante jeweils Winkel über 90° einschließen.
Insbesondere bei Schneideinsätzen, bei denen diese Winkel nur geringfügig über 90° liegen, ist dann auch der Freiwinkel der seitlichen Schneidkanten sehr gering und oft weit von einem für die Zerspanung optimalen Wert von etwa 6° entfernt. Dadurch kommt es zu einem raschen Verschleiß dieser seitlichen Schneidkanten.
Diese Freiwinkel können auch nicht durch ein stärkeres Verkippen der Schneideinsätze beim Profilschleifen beliebig vergrößert werden, da sonst der Keilwinkel und damit die mechanische Stabilität der stirnseitigen Schneidkanten zu klein werden würde.

Die Aufgabe der vorliegenden Erfindung ist es daher ein Verfahren zu schaffen, mit dessen Hilfe es möglich ist, auch bei ungünstigen Geometrien bei den genannten Schneideinsätzen zur Gewindeherstellung, an allen Schneidkanten der einzelnen Zähne die optimalen Freiwinkel vorzusehen um damit deutlich bessere Standzeiten der Schneideinsätze zu erreichen. Darüberhinaus soll eine kostengünstigere Fertigung der Schneideinsätze ermöglicht werden.

Erfindungsgemäß wird dies dadurch erreicht, daß der Rohling unter Ausbildung der einzelnen Schneidzähne gefertigt wird und zwar mit
- Freiwinkeln von mindestens 3° für die konisch zueinander verlaufenden Freiflächen der seitlichen Schneidkanten der einzelnen Zähne
- einer Profiltiefe des letzten, das Gewinde fertigschneidenden Zahnes innerhalb der geforderten Endmaßtoleranz
- Übermaß in der Dicke des Schneideinsatzes und in der Zahnbreite der Schneidzähne
und daß dann der Rohling an der Auflage- und/oder Spanfläche so lange mechanisch bearbeitet wird, bis die Zahnbreite der Schneidzähne und die Dicke des Schneideinsatzes innerhalb der geforderten Endmaßtoleranzen liegen.

Bei der pulvermetallurgischen Herstellung von Formteilen ist es aufgrund des Materialschwundes bei der Sinterung und eines Verzuges des Preßlings bereits bei einfachen Formen mit geraden, senkrecht zueinander stehenden Flächen schwierig, die Formteile ohne nachfolgende mechanische Bearbeitung mit hoher Maßgenauigkeit herzustellen. Im vorliegenden Fall einer Gewindeschneidplatte mit einer komplexeren Formgebung, wo infolge der notwendigen Freiwinkel auch schräg verlaufende Flächen vorhanden sind, kommt es zu unterschiedlichen Materialverdichtungen des Preßlings, was wiederum zu unterschiedlicher Schrumpfung und damit auch zu stärkeren Verzugsproblemen führt. Daher erschien es bisher für den Fachmann undenkbar, Schneideinsätze die mehrere genaue Abmessungen innerhalb engster Toleranzen aufweisen müssen, im vorliegenden speziellen Fall insbesondere die Profiltiefe und die Zahnbreite des Fertigschneiders, ohne aufwendige mechanische Bearbeitung des gesamten Profiles dieser Schneidzähne herzustellen.

Erfindungsgemäß wird nun ein völlig neuer Weg eingeschlagen, indem nicht mehr wie bisher üblich in einem Schritt gleichzeitig alle genauen Abmessungen der Schneidzähne hergestellt werden, sondern indem dies in zwei getrennten Schritten erfolgt. In einem ersten Schritt wird das genaue Maß der Profiltiefe des Fertigschneiders innerhalb der geforderten Toleranzen bereits durch gezieltes Auslegen des Preßwerkzeuges erreicht, so daß dieses Maß ohne zusätzliche mechanische Bearbeitung bereits nach dem Pressen und Sintern vorliegt. In einem zweiten Schritt wird danach die genaue Zahnbreite der Schneidzähne und die genaue Dicke des Schneideinsatzes durch mechanische Bearbeitung hergestellt, was durch einfaches Planschleifen der Auflageund/oder Spanfläche erfolgt. Da diese Schleifoperationen auch bei der Herstellung der Schneideinsätze nach dem Stand der Technik notwendig sind, wird gegenüber der bisherigen Fertigung durch den Wegfall des aufwendigen Profilschleifvorganges eine beträchtliche Kostensenkung bei der Herstellung der Schneideinsätze erreicht und gleichzeitig eine verbesserte Zerspanungsgeometrie verbunden mit einer deutlichen Standzeiterhöhung erreicht. Dadurch, daß das Profilschleifen entfallen kann, ist man auch in der Lage die Freiflächen der seitlichen Schneidkanten konisch zueinander verlaufend zu fertigen, womit wesentlich größere Freiwinkel dieser Flächen erzielbar sind.

Besonders vorteilhaft wird das erfindungsgemäße Verfahren derart angewandt, daß nach der Herstellung des Rohlings zuerst die Auflagefläche des Schneideinsatzes um einen bestimmten Betrag vorgeschliffen wird, daß dann die Spanfläche so lange geschliffen wird bis die gewünschte Zahnbreite des Fertigschneiders erreicht ist und schließlich die Auflagefläche so lange fertiggeschliffen wird bis die gewünschte Dickentoleranz des Schneideinsatzes erreicht ist.

Wichtig dabei ist, daß das Vorschleifen der Auflagefläche bei allen Schneideinsätzen eines Fertigungsloses mit derselben Abtragstärke erfolgt. Damit wird die durch die Fertigung bedingte Stärkentoleranz der Rohlinge eliminiert, die sonst eine Streuung der Zahnbreite des Fertigschneiders und der Plattenstärke mit sich bringt.

Die häufigste Gewindeform bei Rohren für die Erdölindustrie ist das Buttress-Gewinde. Bei der Herstellung dieses Gewindes ist die Anwendung des erfindungsgemäßen Verfahrens besonders vorteilhaft, wobei die Herstellung von Schneideinsätzen mit fünf nacheinander abgestuften Schneidzähnen, bei denen die Freiwinkel der Freiflächen der seitlichen Schneidkanten 5° und die Freiwinkel der Freiflächen der stirnseitigen Schneidkanten 6° betragen, zweckmäßig ist.
Mit diesen Freiwinkeln werden optimale Zerspanungsbedingungen erreicht, die eine lange Standzeit des Schneideinsatzes gewährleisten.

Im folgenden wird die Erfindung anhand von Figuren und eines Herstellungsbeispieles näher erläutert.
- Figur 1: zeigt einen nach dem erfindungsgemäßen Verfahren hergestellten Schneideinsatz für die Gewindeherstellung in perspektivischer Ansicht
- Figur 2: zeigt die Stirnansicht des Schneideinsatzes nach Figur 1
- Figur 3: zeigt die Seitenansicht des Schneideinsatzes nach Figur 1 von links

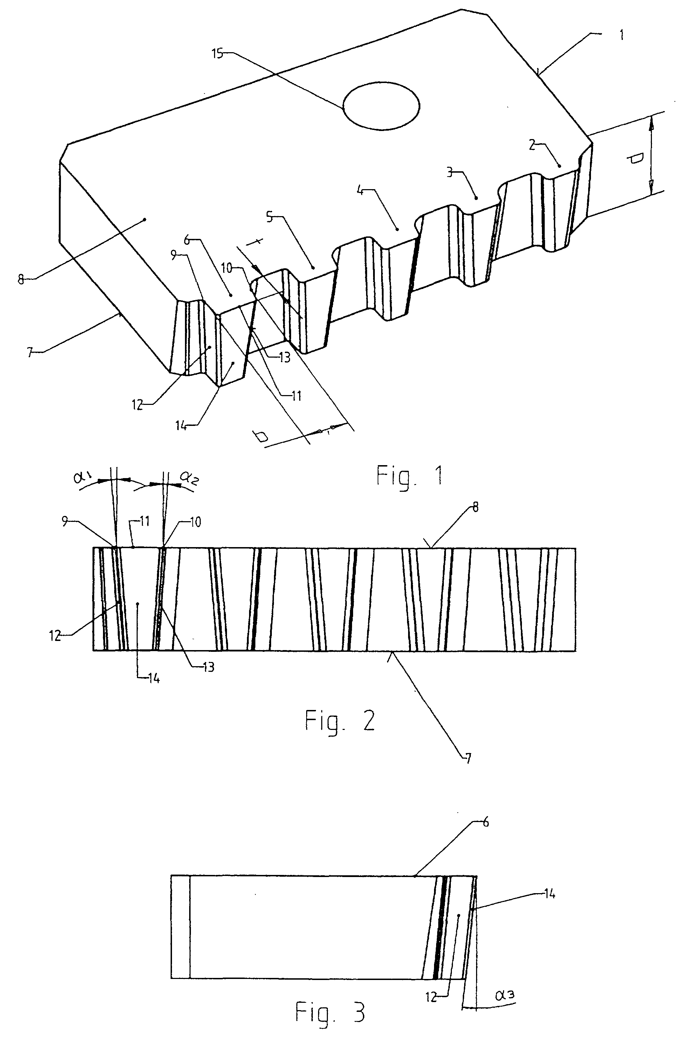

In den Figuren 1 bis 3 ist ein erfindungsgemäß hergestellter Schneideinsatz -1-zur Herstellung eines Buttress-Gewindes dargestellt. Der Schneideinsatz -1- ist einseitig verwendbar und weist fünf nebeneinander angeordnete Schneidzähne -2- bis -6- auf, die das Gewinde in unterschiedlichen Abstufungen von einem ersten Vorschneiden mit dem Zahn -2- bis zum endgültigen Fertigschneiden des Gewindes durch den Fertigschneider -6-bearbeiten.
Charakteristisch bei diesem Schneideinsatz -1- sind die großen Freiwinkel der Freiflächen der seitlichen Schneidkante der einzelnen Zähne -2- bis -6-, die nur durch Anwendung des erfindungsgemäßen Verfahrens für größere Fertigungseinheiten ökonomisch herstellbar sind. Diese Freiwinkel sind in Figur 2 mit α 1 für die Freifläche -12- der seitlichen Schneidkante -9- und mit α 2 für die Freifläche -13- der seitlichen Schneidkante -10- für den Fall des Freischneiders -6- genauer dargestellt und betragen jeweils 5°. Die Freiwinkel der Freiflächen der stirnseitigen Schneidkanten der einzelnen Zähne -2- bis -6-sind in Figur 3 wiederum für den Freischneider -6- beispielhaft dargestellt. Der Freiwinkel -α3- der Freifläche -14- der stirnseitigen Schneidkante -11- beträgt 6°.

Erfindungsgemäß wird der in den Figuren 1 bis 3 dargestellte Schneideinsatz -1- derart hergestellt, daß zuerst der Rohling des Schneideinsatzes durch Pressen und Sintern derart hergestellt wird, daß die Freiwinkel der Freiflächen der seitlichen Schneidkanten der einzelnen Zähne -2- bis -6- 5° betragen und daß die Profiltiefe -t- des Fertigschneiders -6- innerhalb der geforderten Endmaßtoleranz liegt, wobei der Rohling in der Dicke -d- des Schneideinsatzes -1- und in den Zahnbreiten -bder Schneidzähne Übermaß aufweist.
Um dies zu erreichen ist es notwendig, das Preßwerkzeug so auszulegen, daß der bei der Sinterung auftretende Schwund genau kompensiert wird, was für den Fachmann im Hinblick darauf, daß lediglich ein Maß, nämlich die Profiltiefe -t- des Fertigschneiders -6-, genau eingehalten werden muß, keine Probleme bereitet und im Bereich seines Fachwissens liegt.
Nach der Herstellung des Rohlings wird er zweckmäßigerweise zuerst an der Auflagefläche -7- des Schneideinsatzes -1- plangeschliffen. Erfolgt dieser Schliff bei allen Schneideinsätzen eines Fertigungsloses um den gleichen Betrag, wird die durch die Fertigung bedingte Ungleichmäßigkeit in der Dickenabweichung der einzelnen Schneideinsätze weitgehend ausgeschaltet. Nach diesem ersten Planschliff der Auflagefläche -7- wird die Spanfläche -8- so lange plangeschliffen bis die Zahnbreite -b- des Fertigschneiders -6- das gewünschte Endmaß innerhalb der geforderten Toleranzen aufweist, wobei die Zahnbreite -b- in Höhe der halben Profiltiefe -t- des Zahnes gemessen wird. Abschließend wird der Schneideinsatz wiederum an der Auflagefläche -7- so lange plangeschliffen bis die Dicke -d- des Schneideinsatzes -1- innerhalb der geforderten Endmaßtoleranz liegt.

Die Figuren und das Herstellungsbeispiel beschreiben nur eine besonders vorteilhafte Ausgestaltung der Erfindung. Diese ist jedoch keinesfalls darauf beschränkt.

So ist es auch denkbar, daß der Schneideinsatz als Wendeschneidplatte mit zwei oder mehr Zahnreihen zur Gewindeherstellung aufweist.
Ebenso ist es denkbar, daß das Schleifen des Schneideinsatzes an der Auflagefläche entfallen kann.
Desgleichen ist das erfindungsgemäße Verfahren ebenso zur Herstellung von Schneideinsätzen für die Fertigung von Trapezgewinden oder auch von Rundgewinden kostengünstig anwendbar.

## Patentansprüche

1. Verfahren zur Herstellung eines Schneideinsatzes (1) für die Gewindeherstellung mit mehreren gleichzeitig in Schneideinsatz stehenden, das Gewindeprofil abgestuft schneidenden Schneidzähnen (2,3,4,5,6), durch Pressen und Sintern eines Rohlings und anschließende mechanische Bearbeitung auf Endmaß,
**dadurch gekennzeichnet,**
**daß** der Rohling unter Ausbildung der einzelnen Schneidzähne (2,3,4,5,6) gefertigt wird, und zwar mit
- Freiwinkeln von mindestens 3° für die konisch zueinander verlaufenden Freiflächen der seitlichen Schneidkanten (9,10) der einzelnen Zähne (2,3,4,5,6)
- einer Profiltiefe (t) des letzten, das Gewinde fertigschneidenden Zahnes (6) innerhalb der geforderten Endmaßtoleranz
- Übermaß in der Dicke (d) des Schneideinsatzes (1) und in der Zahnbreite (b) der Schneidzähne (2,3,4,5,6)
und **daß** dann der Rohling an der Auflage- und/oder Spanfläche (8) so lange mechanisch bearbeitet wird, bis die Zahnbreite (b) der Schneidzähne (2,3,4,5,6) und die Dicke (d) des Schneideinsatzes (1) innerhalb der geforderten Endmaß-toleranzen liegen.

2. Verfahren zur Herstellung eines Schneideinsatzes (1) für die Gewindeherstellung nach Anspruch 1, **dadurch gekennzeichnet, daß** nach der Herstellung des Rohlings zuerst die Auflagefläche (7) des Schneideinsatzes (1) um einen bestimmten Betrag abgeschliffen, dann die Spanfläche (8) so lange geschliffen wird, bis die gewünschte Zahnbreite (b) der Schneidzähne (2,3,4,5,6) erreicht ist und schließlich wieder die Auflagefläche (7) geschliffen wird bis die gewünschte Dicke (d) des Schneideinsatzes (1) erreicht ist.

3. Verfahren zur Herstellung eines Schneideinsatzes (1) für die Herstellung eines Buttress-Gewindeprofiles nach Anspruch 1 oder 2, **dadurch gekennzeichnet, daß** der Schneideinsatz fünf nebeneinander liegende Schneidzähne (2,3,4,5,6) aufweist, wobei bei den einzelnen Zähnen (2,3,4,5,6) die Freiwinkel (α1, α2) der Freiflächen (12,13) der seitlichen Schneidkanten (9,10) 5° und der Freiwinkel (α3) der Freifläche (14) der stirnseitigen Schneidkante (11) 6° betragen.

## Claims

1. Method of producing, by the pressing and sintering of a blank and subsequent mechanical machining to final size, a cutting insert (1) for thread-producing purposes which has a number of cutting teeth (2, 3, 4, 5, 6) which are in cutting engagement at the same time and which cut the thread profile in a graduated manner,
**characterised in that**
the blank is manufactured while forming the individual cutting teeth (2, 3, 4, 5, 6), namely with
- clearance angles of at least 3° for the flanks, which extend conically in relation to one another, of the lateral cutting edges (9, 10) of the individual teeth (2, 3, 4, 5, 6),
- a profile depth (t) of the last tooth (6), which finish-cuts the thread, within the required final-size tolerance, and
- an oversize in the thickness (d) of the cutting insert (1) and in the tooth breadth (b) of the cutting teeth (2, 3, 4, 5, 6),
and that the blank is then mechanically machined on the bearing face and/or cutting face (8) until the tooth breadth (b) of the cutting teeth (2, 3, 4, 5, 6) and the thickness (d) of the cutting insert (1) lie within the required final-size tolerances.

2. Method of producing a cutting insert (1) for thread-producing purposes according to claim 1, **characterised in that**, after the production of the blank, the bearing face (7) of the cutting insert (1) is first ground down by a certain amount, and the cutting face (8) is then ground until the desired tooth breadth (b) of the cutting teeth (2, 3, 4, 5, 6) is achieved, and finally the bearing face (7) is ground again until the desired thickness (d) of the cutting insert (1) is achieved.

3. Method of producing a cutting insert (1) for producing a buttress thread, according to claim 1 or 2, **characterised in that** the cutting insert has five cutting teeth (2, 3, 4, 5, 6) lying side by side, the clearance angles (α1, α2) of the flanks (12, 13) of the lateral cutting edges (9, 10) being 5°, and the clearance angles (α3) of the flank (14) of the front-end cutting edge (11) being 6°, in the case of the individual teeth.

## Revendications

1. Procédé de fabrication, par compression et frittage d'une ébauche et usinage mécanique ultérieur à dimensions finales, d'une plaquette de coupe (1) de fabrication de filets qui inclut plusieurs dents de coupe en saillie de la plaquette de coupe (2,3,4,5,6) taillant simultanément le profil fileté en échelons,
**caractérisé en ce que**
l'ébauche est fabriquée en configurant les dents de coupe individuelles (2,3,4,5,6) selon le profil suivant :
- des angles de dépouille d'au moins 3° pour les surfaces libres, qui se raccordent entre elles de façon conique, des arêtes latérales (9,10) de coupe des dents individuelles (2, 3, 4, 5, 6) ;
- une profondeur (t) de profil de la dernière dent (6) qui finit la taille du filet à la tolérance dimensionnelle finale exigée,
- une surépaisseur (d) de la plaquette de coupe (1) et un excès de largeur (b) de dents des dents de coupe (2, 3, 4, 5, 6),
et **en ce que** l'ébauche est ensuite usinée mécaniquement sur la surface d'appui et/ou la surface de serrage (8) jusqu'à ce que la largeur (b) de dent des dents de coupe (2, 3, 4, 5, 6), et l'épaisseur (d) de la plaquette de coupe (1) satisfassent aux tolérances dimensionnelles finales exigées.

2. Procédé de fabrication d'une plaquette de coupe (1) pour la fabrication de filets selon la revendication 1, **caractérisé en ce que**, après la fabrication de l'ébauche, la surface d'appui (7) de la plaquette de coupe (1) est d'abord rectifiée d'une certaine quantité, que la surface de serrage (8) est ensuite suffisamment rectifiée pour atteindre la largeur souhaitée (b) de dent des dents de coupe (2,3, 4, 5, 6) et que la surface d'appui (7) est finalement rectifiée de nouveau jusqu'à ce que soit atteinte l'épaisseur souhaitée (d) de la plaquette de coupe (1).

3. Procédé de fabrication d'une plaquette de coupe (1) pour la fabrication de filets selon la revendication 1 ou 2, **caractérisé en ce que** la plaquette de coupe comporte cinq dents de coupe (2, 3, 4, 5, 6) agencées côte à côte, dans lequel le profil des dents individuelles (2, 3, 4, 5, 6) est tel que les angles (α1, α2) de dépouille des surfaces libres (12, 13) des arêtes latérales (9, 10) de coupe sont de 5° et que l'angle de dépouille (α3) de la surface libre (14) de l'arête de coupe (11) du côté frontal est de 6°.
